# EUROPÄISCHE PATENTSCHRIFT

(11) **EP 0 491 299 B1**
(45) Veröffentlichungstag und Bekanntmachung des Hinweises auf die Patenterteilung: **20.07.1994**
(21) Anmeldenummer: 91121421.1
(22) Anmeldetag: 13.12.1991
(51) Int. Cl.: A23C 19/082

(54) **Schmelzkäsezubereitung**
Process cheese preparation
Préparation de fromage fondu

(30) Priorität: 19.12.1990 DE 4040622
(43) Veröffentlichungstag der Anmeldung: 24.06.1992
(73) Patentinhaber: BK LADENBURG GmbH, Gesellschaft für chemische Erzeugnisse, D-68526 Ladenburg (DE)
(72) Erfinder: Merkenich, Karl, Dr., W-6149 Fürth/Fahrenbach (DE); Maurer-Rothmann, Andrea, Dr., W-6940 Weinheim (DE); Walter, Edgar, W-6800 Mannheim 1 (DE); Scheurer, Günter, W-6733 Hasloch (DE); Klostermeyer, Henning, Prof. Dr., W-8050 Freising (DE)
(74) Vertreter: Grussdorf, Jürgen, Dr.

(56) Entgegenhaltungen:
- EP-A- 0 382 291
- DE-A- 2 912 778
- PATENT ABSTRACTS OF JAPAN Band 7, Nr. 281 (C-200)(1426), 15. Dezember 1983;&& JP - A - 58162239 (YUKIJIRUSHI NIYUUGIYOU K.K.) 26.09.1983
- PATENT ABSTRACTS OF JAPAN Band 5, Nr. 58 (C-51)(730), 21. April 1981; & JP-A-5611750 (Meiji Niyuugiyou K.K.) 05.02.1982

## Beschreibung

Die Erfindung betrifft eine neuartige Schmelzkäsezubereitung sowie die Verwendung spezieller Zusatzstoffe bei der Herstellung von Schmelzkäse.

Schmelzkäsezubereitungen wurden bereits im Jahre 1911 erstmalig hergestellt und in der Folge durch Wechsel der Zusammensetzung der Ausgangsstoffe laufend geschmacklich, im Aussehen und in der Textur verbessert. Je nach der Zusammensetzung können dabei streichfähige oder schnittfeste Produkte erhalten werden. Ausgangsmaterial ist ein schnittfester Käse wie Gouda, Emmentaler etc., welcher zerkleinert und zusammen mit Fett, insbesondere Butter und Schmelzsalzen sowie ggfl. etwas Wasser, bei Temperaturen von ca. 80-95° C gemischt und geschmolzen wird, wonach die Masse ausgeformt, abgekühlt und verpackt wird.

Der Zusatz von Schmelzsalzen mit ihrer calciumkomplexierenden und puffernden Wirkung in einer Menge von etwa 2,5 - 4 % der Gesamtmasse erweist sich dabei als unbedingt erforderlich, um eine Entmischung von Casein, Fett und Wasser zu verhindern. Andererseits zeigt sich, daß die Schmelzsalze bei längerer Lagerung, insbesondere bei wechselnden Temperaturen, zu einer Abscheidung von Kristallen an der Oberfläche des Schmelzkäses führen. Die in sehr feinen Kristallen ausgeschiedenen Stoffe werden vom Verbraucher entweder für Schimmel gehalten oder der Käse aufgrund der "sandigen" Oberfläche ebenfalls nicht mehr als für den Verzehr geeignet erachtet. Naturgemäß tritt die Auskristallisation umso schneller und reichlicher auf, je höher die Konzentration der Schmelzsalze ist, so daß insbesondere bei 3 bis 4 % Schmelzsalz eine Kristallbildung innerhalb von wenigen Wochen beobachtet wird, jedoch läßt sich auch bei für das Schmelzen nicht mehr voll ausreichenden Zusätzen von nur noch 1 1/2 - 2 % Schmelzsalz bisher eine Auskristallisation nicht ausschließen, insbesondere, wenn Trinatriumcitrat als Schmelzsalz eingesetzt wird.

Es bestand daher ein Bedürfnis, Schmelzkäsezubereitungen herzustellen, die einerseits ein für eine problemlose Herstellung ausreichendes Schmelzverhalten ausweisen und andererseits nicht zur Auskristallisation von Schmelzsalzen führen. Weiterhin dürfen die Zusätze die geschmacklichen und sensorischen Eigenschaften des fertigen Schmelzkäses nicht negativ beeinflussen.

Diese Aufgabe wird durch die in Anspruch 1 beschriebene Maßnahme gelöst und durch die in den Unteransprüchen beschriebenen Maßnahmen zusätzlich gefördert.

Glycerin- oder Saccharoseester mit Citronensäure und/oder Fettsäuren sind als Emulgatoren und Zusatzstoffe für Milch- und Sahnedessert bzw. Eiscremes in Mengen bis 0,5 % bereits bekannt. Diese Stoffe haben dabei die Aufgabe, die Entmischung der Wasser/Ölphasen zu verhindern.

Überraschenderweise wirken solche Stoffe in den erfindungsgemäßen Schmelzkäsezubereitungen nicht nur als Emulgatoren, sondern erlauben es, die Zugabemenge der Schmelzsalze, insbesondere von Trinatriumcitrat, gegenüber bekannten Rezeptoren etwa zu halbieren, so daß es nicht mehr zur Kristallbildung kommt und die Ausblühungen an der Oberfläche unterbleiben.

Für eine ausreichende Wirkung der Zusätze ist es erforderlich, etwa 0,5 - 2,5 % der Gesamtmenge zuzufügen, wobei ein Überschuß den Effekt natürlich nicht verhindert, sondern lediglich aus wirtschaftlichen und geschmacklichen Gründen nicht sinnvoll ist. In den erfindungsgemäßen Schmelzkäsemischungen können problemlos bis zu 3 %, vorzugsweise 1,5-3%, Schmelzsalze enthalten sein, ohne daß es zu einer Auskristallisation kommt.

Als erfindungsgemäße Ester werden insbesondere Saccharose-mono- und -diester mit Speisefettsäuren mit 8-20, vorzugsweise 12 bis 18 C-Atomen, welche gesättigt oder auch ungesättigt sein können, verwendet. Die Glycerinester enthalten neben 1 oder 2 der vorstehenden Speisefettsäurereste noch einen Citronensäurerest. Bevorzugt werden 0,5-2% der Ester zugesetzt.

Als Schmelzsalze werden Trinatriumcitrat oder Natriumphosphat oder deren Mischungen, meist in Form der handelsüblichen Hydrate, verwendet.

Als Bindemittel und Verdicker können in üblichen Mengen, d.h. 0-3 %, vorzugsweise 0,5-1 %, der Gesamtmasse, Stärke, modifizierte Stärke, insbesondere durch Teilabbau und/oder Derivatisierung löslich gemachte Stärke, Guarmehl, Johannisbrotmehl, Carrageen, Pektin, Methyl- oder Carboxymethylcellulose, Agar Agar, Alginate oder ähnliche Produkte zugesetzt werden.

Als Fettquelle wird Butter bevorzugt. Es ist jedoch auch möglich, andere tierische oder pflanzliche Fette und Öle, wie sie in der Margarineindustrie verwendet werden, oder auch Rahm einzusetzen.

Als Käseersatzstoffe können Kasein, Molkepulver, Quark, Joghurt, Milcheiweiß und in gewissem Umfang auch pflanzliche Proteine, insbesondere Sojaproteine, mit verwendet werden.

Um den Geschmack zu verändern, können Würzsalze und Kräuter und gegebenenfalls stückige Produkte wie Fleischprodukte, Früchte, Nüsse, Pilze etc. zugefügt werden.

Es ist heute teilweise auch gebräuchlich, die Käsemasse durch Einleiten von Gas, insbesondere Stickstoff, in einen aufgeschäumten, cremigen Zustand zu bringen. Auch solche Ausführungsformen sind mit den erfindungsgemäßen Zusammensetzungen möglich.

In den folgenden Beispielen ist die Erfindung näher beschrieben.

### Beispiel 1

### Streichfähiger Schmelzkäse

- 71,7 kg: Gouda (45 % Fett i.Tr.)
- 1,8 kg: Trinatriumcitrat
- 1,4 kg: Distearoylcitronensäureglycerid (Lamegin 7E609)
- 5,2 kg: Butter
- 19,9 kg: Wasser

Die vorstehenden Produkte werden in einem Rührkessel zusammengegeben und unter langsamem Rühren unter Durchleiten von Wasserdampf in etwa 10-20 min auf die Schmelztemperatur von 90-92° C erwärmt. Danach wird unter kräftigem Rühren homogenisiert, die Masse in Formen gegossen, auf Raumtemperatur abgekühlt und 12 Stunden zwischengelagert. Die Endlagerung bis zum Gebrauch erfolgt bei 6° C.

Es wird ein streichfähiger Schmelzkäse erhalten, welcher 46 % Fett i.Tr. bei einer Gesamttrockenmasse von 46 % enthält. Auch nach einer Lagerzeit von 4-6 Monaten verändern sich Aussehen und Konsistenz nicht, insbesondere ist kein Ausblühen der Schmelzsalze zu beobachten.

### Beispiel 2

### Schnittfester Schmelzkäse

- 74,9 kg: Gouda (45 % Fett i.Tr.)
- 1,5 kg: Trinatriumcitrat
- 0,4 kg: modifizierte Stärke (Wachsmaisstärke (Purity W))
- 1,0 kg: Saccharosemonostearoylmonocitronensäureester
- 4,2 kg: Butter
- 18,0 kg: Wasser

Die Mischung wird wie in Beispiel 1 verarbeitet, jedoch auf 95° C erwärmt.

Es wird ein schnittfester Käse erhalten mit einem Fettgehalt von 47 % i.Tr. und einer Trockenmasse von ca. 50 %. Auch bei dieser Zubereitung wird nach 6 Monaten Lagerung kein Ausblühen von Schmelzsalzen beobachtet.

### Beispiel 3

### Schnittfester Schmelzkäse

- 73,2 kg: Edamer (46 % Fett i.Tr.)
- 2,5 kg: Trinatriumcitrat
- 2,0 kg: Glycerin-1-citronensäure-3-stearinsäureester (ACIDAN BC)
- 4,8 kg: Butter
- 17,5 kg: Wasser

Die Mischung wird wie in Beispiel 1 beschrieben verarbeitet.

Es wird ein schnittfester Schmelzkäse mit einem Fettgehalt von 46 % Fett i.Tr. erhalten, welcher 6 Monate unverändert lagerfähig ist.

## Patentansprüche

1. Schmelzkäsezubereitung enthaltend Käse, Fett, Schmelzsalze, Wasser und übliche Zusatzstoffe, **dadurch gekennzeichnet**, daß Trinatriumcitrat und/oder Natriumphosphat als Schmelzsalze in einer Menge von 1,5 - 3 % verwendet werden und daß die Schmelzkäsemischung Saccharosemono- oder -diester mit Speisefettsäuren oder Citronensäure und einer Speisefettsäure oder Glycerinester mit einer oder zwei Speisefettsäuren und Citronensäure in einer Menge von 0,5 - 2 % enthält.

2. Schmelzkäsezubereitung gemäß Anspruch 1, **dadurch gekenn****zeichnet**, daß der Ester in einer Menge von 1,0 - 2 % enthalten ist.

3. Schmelzkäsezubereitung gemäß den Ansprüchen 1 oder 2, **dadurch gekennzeichnet,** daß der Ester ein Saccharosemono- oder -diester mit Speisefettsäuren mit 8-20, vorzugsweise 12-18 C-Atomen, welche gesättigt oder ungesättigt sein können, oder ein Glycerinester mit einem oder zwei der vorstehenden Speisefettsäuren und einem Citronensäurerest ist.

## Claims

1. Processed cheese preparation containing cheese, fat, processing salts, water and usual additive materials, characterised in that trisodium citrate and/or sodium phosphate are used as processing salts in an amount of 1.5 - 3% and that the processed cheese mixture contains saccharose mono- or diesters with edible fatty acids or citric acid and of an edible fatty acid or glycerol ester with one or two edible fatty acids and citric acid in an amount of 0.5 - 2%.

2. Processed cheese preparation according to claim 1, characterised in that the ester is contained in an amount of 1.0 - 2%.

3. Processed cheese preparation according to claims 1 or 2, characterised in that the ester is a saccharose mono- or diester with edible fatty acids with 8 - 20, preferably 12 - 18 C-atoms, which can be saturated or unsaturated, or a glycerol ester with one or two of the above edible fatty acids and a citric acid residue.

## Revendications

1. Préparation de fromage fondu contenant du fromage, de la graisse, des sels de fusion, de l'eau et des additifs courants, caractérisée en ce que, comme sels de fusion, on utilise du citrate trisodique et/ou du phosphate de sodium en une quantité de 1,5-3 % et en ce que le mélange de fromage fondu contient du monoester ou diester de saccharose avec des acides gras alimentaires ou de l'acide citrique et un acide gras alimentaire ou un ester de glycérine avec un ou deux acides gras alimentaires et de l'acide citrique, en une quantité de 0,5-2 %.

2. Préparation de fromage fondu suivant la revendication 1, caractérisée en ce que l'ester est contenu en une quantité de 1,0-2 %.

3. Préparation de fromage fondu suivant l'une des revendications 1 et 2, caractérisée en ce que l'ester est un monoester ou diester de saccharose avec des acides gras alimentaires comportant 8-20, de préférence 12-18, atomes de C qui peuvent être saturés ou insaturés, ou un ester de glycérine avec un ou deux des acides gras alimentaires précités et un radical d'acide citrique.
